(19) Europäisches Patentamt

European Patent Office

Office européen des brevets

(11) **EP 0 635 959 B1**

(12) **FASCICULE DE BREVET EUROPEEN**

(45) Date de publication et mention
de la délivrance du brevet:
**07.06.2000 Bulletin 2000/23**

(51) Int. Cl.⁷: **H04L 12/56**

(21) Numéro de dépôt: **94401606.2**

(22) Date de dépôt: **12.07.1994**

(54) **Procédé d'optimisation du débit d'un canal de communication en partage de temps**

Verfahren zur Optimierung der Übertragungsgeschwindigkeit in einem zeitverteilten Kommunikationskanal

Method to optimize the transmission rate in a time shared communications channel

(84) Etats contractants désignés:
**DE FR GB IT SE**

(30) Priorité: **20.07.1993 FR 9308891**

(43) Date de publication de la demande:
**25.01.1995 Bulletin 1995/04**

(73) Titulaire: **THOMSON-CSF
75008 Paris (FR)**

(72) Inventeur: **Janex, Albert
F-92402 Courbevoie Cedex (FR)**

(74) Mandataire:
**Brykman, Georges et al
THOMSON multimedia,
46 quai A. Le Gallo
92648 Boulogne Cédex (FR)**

(56) Documents cités:
**FR-A- 2 438 877**

- TENCON '89, Novembre 1989, NEW YORK, US pages 798 - 803 R.K. PANKAJ ET AL. 'TWO MULTI ACCESS ALGORITHMS FOR CHANNEL FOR MULTIPLE RECEPTION CAPACITY'

## Description

L'invention se situe dans le domaine des procédés d'accès à un canal de communication travaillant en temps partagé, en particulier pour système de gestion de trafic.

Il existe actuellement des études de système anti-collision ou de gestion de trafic par exemple aérien ou maritime dans lesquels chaque mobile participant au système émet périodiquement un message normalisé. Ce message comporte des indications sur la position géographique du mobile et éventuellement, d'autres indications utilisées pour gérer des manoeuvres d'évitement, tels que par exemple cap, vitesse, prochain cap. Un mode particulier de réalisation d'un tel système est décrit par la demande de brevet français n° 2 689 282 déposée au nom de la Demanderesse. Selon ce mode le temps est conventionnellement divisé en périodes de temps T, et chaque période est elle même divisée en un nombre M de tranches, chaque tranche étant repérée par un index 1, 2, 3...i...N. Une synchronisation est maintenue de façon connue entre les différents mobiles participant au système, par distribution d'un temps universel diffusé à partir d'une station dont la position est connue. Chaque mobile connaissant sa propre position peut alors se synchroniser en tenant compte des temps de parcours de l'information de synchronisation entre lui-même et la station de diffusion. L'attribution d'une tranche d'émission à un mobile participant au système est réalisée à partir d'une station centrale, par exemple l'un des utilisateurs.

On arrive alors à une utilisation optimale du canal, dont la charge peut approcher 100% (soit un canal occupé en permanence, sans temps morts ni collisions de messages).

Cette solution connue sous le nom de AMRT (Accès Multiple à Répartition dans le Temps) ou TDMA (Time Division Multiple Access).n'est pas toujours souhaitable (chef d'orchestre vulnérable) ou possible (essaim d'utilisateurs mobiles).

C'est pourquoi il est prévu également dans certains systèmes que l'accès au réseau se fasse de façon aléatoire. Chaque participant écoute la fréquence et repère les tranches occupées puis émet en choisissant de façon aléatoire l'une des tranches libres, en espérant qu'aucun nouvel (ou ancien) utilisateur n'aura choisi cette même tranche.

Le succès est élevé lorsque le canal est très peu chargé. Le risque de collision entre messages (d'utilisateurs différents) augmente avec la charge du canal, pour tendre vers une pollution de tous les messages. Des calculs statistiques indiquent une valeur égale à 1/e (soit 36,8%) comme charge maximale admissible.

Cette technique d'accès est connue sous le nom d'ALOHA en tranches ou en anglais "Slotted ALOHA". Par rapport à une technique d'accès sans découpage en tranches et sans synchronisation la technique du découpage en tranches permet de doubler la capacité du canal du fait qu'il n'y a pas de chevauchement partiel. Un message est entièrement pollué ou ne l'est pas.

D'autres techniques ont été proposées telles que celles basées sur des algorithmes du type FCFS (First Come First Served) de Gallager. Elles sont décrites notamment dans l'article 〈〈 Two multi access algorithms for channels with multiple reception capacity 〉〉 de R.K. Pankaj et A.J. Viterbi, TENCON '89, 22-24 Novembre 1989, pages 798-803. Mais ces techniques supposent une capacité de réception multiple impliquant un codage sophistiqué à correction d'erreur, plusieurs paquets étant transmis simultanément dans une tranche.

Le procédé selon l'invention est applicable à un système du type ALOHA en tranches. Il a pour but d'augmenter la capacité réelle du canal, toutes conditions en particulier, les longueurs des périodes et des tranches étant égales par ailleurs. Dans un mode de réalisation particulier, il a également pour but de permettre à chaque mobile participant au système de vérifier que la tranche sur laquelle il émet n'est pas polluée par un autre utilisateur.

Le procédé selon l'invention est du type ALOHA en tranches. Il s'agit donc d'un procédé où les mobiles utilisateurs sont synchronisés et dans lequel le temps est divisé en périodes de durée T, chaque période étant elle même divisée en N tranches. Un message d'utilisateur occupe une tranche de temps. L'accès au réseau se fait après au moins une période d'écoute destinée à repérer les tranches libres par choix aléatoire d'une tranche repérée libre. Il est spécifié que dans ce type de méthode connue comme dans le procédé selon l'invention, chaque mobile émet au moins une fois par période et éventuellement plusieurs fois si la fréquence nécessaire de la production de son message est supérieure à la fréquence de répétition de la période T. De façon connue la fréquence de répétition du message d'un mobile croît avec la proximité de ce mobile par rapport à un autre mobile. Lorsqu'un mobile est très éloigné d'autres mobiles, il est possible de réduire la fréquence de son message.

La valeur de la période est définie précisément en fonction du besoin le plus faible, correspondant alors à une émission une seule fois par période.

Cette façon de faire permet de rendre stable la trame de la période. La trame de la période est constituée par la présence réelle des émissions dans certaines des tranches de la période. Afin de faciliter l'accès de nouveaux utilisateurs on a intérêt à ce que cette trame soit stable. On dira que la trame est stable si elle n'évolue que lentement. L'idéal serait que la trame n'évolue que par la fin d'occupation de tranches par les mobiles quittant la zone et l'occupation de tranches libres par les mobiles arrivant dans la zone ou par les mobiles déjà présents dans la zone mais ayant besoin d'augmenter la fréquence d'émission de leur message. Dans les procédés connus, en raison du mode d'accès au réseau, aucun mobile n'est sûr que la tranche qu'il a choisie n'a pas été choisie simultanément par un autre mobile.

Si tel est le cas, les mobiles émettant sur la même tranche n'ont aucune possibilité de se rendre compte que leur propre message est pollué par la présence simultanée d'autres messages. Afin d'écourter la durée d'éventuelles émissions simultanées et de diminuer leur probabilité d'occurrence, il est prévu dans les procédés connus que les mobiles participant au réseau changent eux-mêmes de tranche de temps à autre. Cette possibilité de changement de tranche augmente la probabilité de choix d'une même tranche libre par plusieurs mobiles. La même tranche libre peut être choisie non seulement par les accédants au réseau ou à une tranche supplémentaire mais aussi par des participants qui souhaitent simplement commuter leur tranche.

Le procédé selon l'invention a pour but d'assurer une plus grande stabilité de la trame d'émission. Cette stabilité de la trame a pour conséquence de faciliter l'accès au réseau, en diminuant la probabilité de choix d'une même tranche libre par plusieurs mobiles. De façon complémentaire l'invention a pour but de limiter les changements de tranches par un utilisateur occupant déjà une tranche. Le changement de tranche n'interviendra qu'en cas d'occupation réelle de la même tranche par au moins un autre mobile utilisateur du réseau. Le procédé, du fait des avantages mentionnés ci-dessus, permet d'augmenter la capacité réelle du réseau.

L'invention est applicable non seulement pour le canal de communication d'un système anti-collision mais aussi pour tout système de communication employant un canal unique en temps partagé que chaque utilisateur n'utilise qu'en cas de besoin. Selon l'urgence de la transmission de son message l'utilisateur sera amené à rechercher une ou plusieurs tranches de temps à l'intérieur de chaque période.

A toutes ces fins, l'invention a pour objet un procédé de recherche par un utilisateur d'une tranche de temps libre sur un canal de communication en temps partagé, tel que défin dans les revendications.

Le procédé général revendiqué est applicable à tout réseau d'utilisateurs partageant un canal commun. Lorsqu'un utilisateur a une information à transmettre, il accède au canal par le procédé décrit, émet son message, fractionné en tranches, à raison d'au moins une tranche par période pour assurer la stabilité de la trame. Il quitte le canal en fin de transmission. Dans un cas plus particulièrement visé par l'invention où le procédé est appliqué à un système de gestion de trafic, les utilisateurs sont les mobiles gérés et éventuellement des stations fixes en liaison avec ces mobiles. Les informations à transmettre sont essentiellement des informations relatives à la gestion ou au contrôle du trafic et les messages sont en général normalisés afin de réduire leur durée.

Les différentes façons d'utiliser ce procédé seront ci-après examinées.

Avec ce procédé, on voit que au minimum pendant la première période où le mobile choisit d'utiliser la tranche i, l'émission n'est destinée qu'à manifester une présence ou une intention d'occupation. Pour la première période il peut être avantageux de diminuer la durée des sous-tranches d'émission, c'est à dire de prévoir des sous-tranches d'émission de durée courte mais néanmoins suffisante pour être détectées par les autres mobiles. La durée des sous-tranches d'émission étant déterminée par ce critère, seule la longueur des sous-tranches R de réception sera fixée de façon aléatoire au cours de l'étape a.

Si avant que le mobile ait commencé à émettre aucune émission d'un autre mobile n'a été reçue, le mobile émettra pendant une première courte sous-tranche.

Les autres mobiles recevront cette émission et s'abstiendront alors d'émettre sur cette sous-tranche.

Si l'on appelle $t_m$, le temps de parcours d'une émission entre deux mobiles et $t_r$ le temps nécessaire pour détecter une émission, on voit qu'avec le procédé de l'invention, utilisé selon ce premier mode, la probabilité pour qu'un second mobile émette malgré l'émission d'un premier mobile est égale à la probabilité que le second commence à émettre pendant le temps $t_m + t_r$, c'est à dire après le début d'émission du premier, mais avant qu'il n'ait pu matériellement recevoir l'émission.

Cette probabilité est égale à

$$N \frac{(t_{m} + t_{r})}{T}$$

Si deux mobiles commencent à émettre dans la première période, dans la même tranche i et à des instants qui ne sont pas éloignés l'un de l'autre de plus de $t_m + t_r$, des messages de durée égale ils peuvent se croire chacun seul sur la tranche i et donc ils émettront à nouveau au cours de la tranche i de la première période pendant une nouvelle sous-tranche d'émission. La probabilité pour que ces secondes sous-tranches commencent à des moments qui ne diffèrent pas entre eux de plus de $t_m + t_r$ est égale à

$$\frac{t_{m} + t_{r}}{\frac{T}{N} - \delta_1}$$

formule dans laquelle $\delta_1$ désigne le temps écoulé jusqu'à la fin de la première sous-tranche d'émission. La probabilité totale pour que les deux mobiles continuent d'émettre sur la même tranche i lors de la période suivante sera au total

$$\frac{(t_m + t_r)^q}{\frac{T}{N}(\frac{T}{N} - \delta_1)(\frac{T}{N} - \delta_2)(\frac{T}{N} - \delta_{q-1})}$$

formule dans laquelle $\delta_2...\delta_q$ représente les temps écoulés jusqu'à respectivement la fin des deuxième, (q-1) ième sous tranches d'émission .q représente le nombre de sous tranches d'émission.

Pour la première période il peut également être avantageux de ne prévoir qu'une sous-tranche d'émission dont le début et la durée sont aléatoires. Dans ce cas si aucune émission n'est détectée avant que le mobile ait commencé à émettre la probabilité pour que deux mobiles commencent à émettre est

$$N \frac{t_m + t_r}{T} \quad .$$

La durée du message étant aléatoire la probabilité pour que le premier par exemple reçoive la fin du message de l'autre est en première approximation égale à la probabilité pour que la fin de la réception de ce message ait au moins une durée $t_r$ se situant après, la fin de l'émission du premier message. Soit $p_1$ cette probabilité. De même, si $p_2$ désigne la probabilité pour que le second reçoive la fin du message du premier pendant une durée au moins égale à $t_r$, la probabilité pour que l'un ou l'autre reçoive une émission et cesse la sienne est égale à $p_1 + p_2 - p_1 p_2$.

Enfin il est naturellement possible de réaliser une partition de la tranche en sous-tranches d'émission et de réception dont les durées sont aléatoires, les débuts se situant à des moments aléatoirement déterminés par tirage au sort de positions prédéterminées de façon conventionnelle.

Dans tous les cas il a été vu que la probabilité pour que deux mobiles au moins choisissent la même tranche libre i se trouve notablement diminuée par rapport à celle des procédés connus.

On notera qu'elle peut encore être diminuée par répétition des précautions prises lors d'une période précédente au cours de quelques périodes suivantes par exemple.

La probabilité n'est cependant pas nulle et pour éviter d'avoir un grand nombre de périodes avec des mobiles utilisant une même tranche, il va être nécessaire comme dans les procédés connus de changer éventuellement de tranche.

Dans les procédés connus ce changement était effectué a priori de façon aléatoire. Dans le procédé selon l'invention ce changement ne sera opéré que si un autre mobile occupe réellement la tranche. Pour cela dans le procédé selon l'invention il sera procédé à un changement du mode de répartition des sous-tranches de réception et d'émission.

Alors que dans une phase d'accès comprenant un petit nombre de périodes suivant la fin de la période d'écoute totale, on privilégiait plutôt la réception, on privilégiera dans une phase d'occupation les périodes d'émission, en ménageant des sous-tranches de réception, par exemple, par suppression de transmission de quelques informations ou par déplacement aléatoire d'une ou plusieurs sous-tranches de durée normalisée prévues à cet effet, dans le message normalisé.

Dans ce cas, comme précédemment le premier des mobiles, qui au cours d'une sous-tranche de réception reçoit l'émission d'un autre mobile, cesse ses émissions et se déplace dans une autre tranche libre.

Il peut être avantageux pour des raisons technologiques ou pour des questions de normalisation des messages de diviser de façon conventionnelle chaque tranche en p sous-tranches de durées égales.

Dans ce cas le caractère aléatoire de la répartition des sous-tranches en sous-tranches d'émission et de réception n'est assuré que par le choix du rang des sous-tranches consacrées à l'émission où à la réception.

Dans ce dernier cas le procédé selon l'invention est caractérisé en ce que au moins pour une période le nombre de sous-tranches d'émission est au plus égal à (p-1) De la sorte on ménage au moins une sous-tranche de réception.

Comme dans le cas où les sous-tranches ne sont pas réparties a priori en sous-tranches égales l'application du procédé selon l'invention comportera deux phases.

Au cours d'une première phase dite d'accès le nombre de sous-tranches d'émission sera plus petit que le nombre de sous-tranches de réception pour favoriser la réception. La probabilité que deux mobiles commencent à émettre simultanément dans la même sous-tranche, une première fois est 1/p et la probabilité pour que le choix de la tranche i soit conservé par les deux mobiles à la fin de la première période est

$$\frac{1}{P} \frac{1}{(p - r_1)} \frac{1}{(p - r_2)} \frac{1}{p - r_s}$$

formule dans laquelle $r_1$, $r_2...r_s$ représente le rang de la première sous-tranche d'émission et $r_s$ le rang de la tranche d'émission de rang s.

La première phase pourra comprendre un nombre de périodes, consécutives ou non, tel qu'à l'issue de cette phase la probabilité d'occupation de la même tranche par deux mobiles soit inférieure à un seuil déterminé.

Au cours d'une seconde phase dite d'occupation ou de maintien dans la tranche le nombre de sous-tranches d'émission sera grand par rapport au nombre de sous-tranches de réception.

L'invention sera maintenant illustrée à l'aide des dessins explicatifs joints dans lesquels :

- la figure 1, représente la partition du temps en périodes, chaque période comportant N tranches égales ;
- les figures 2a et b, représentent la partition du temps de chaque tranche effectuée de façon aléatoire selon deux modes ;
- la figure 3, représente les séquences d'accès à une tranche ;
- la figure 4, représente le séquencement du procédé au cours d'une phase d'occupation d'une tranche.

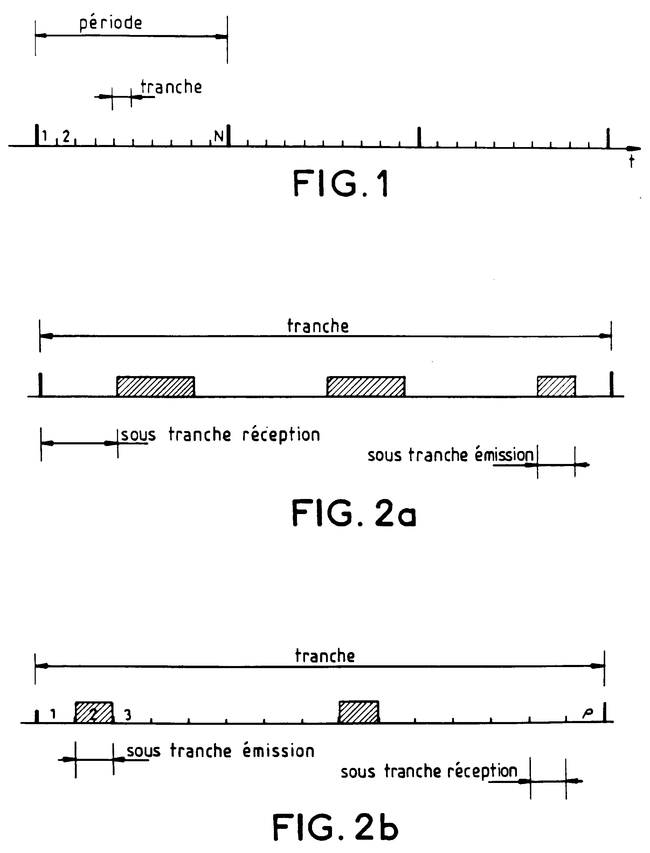

La figure 1, illustre un mode connu de partage du temps en périodes, elle-même divisées en N tranches égales. Pour des raisons de clarté N a été représenté égal à 10 mais dans la pratique il est envisagé des périodes de 1 minute, chaque tranche ayant une durée de 25 ms environ soit 2400 tranches par période. Un tel mode de répartition du temps est connu sous le nom d'ALOHA en tranches. Dans un système anti-collision utilisant ce mode de répartition du temps chaque mobile dispose, idéalement seul, d'une ou plusieurs tranches par période pour émettre sur un canal commun un message contenant au moins sa position. Chaque mobile participant dispose d'une base de temps synchronisée sur une horloge commune. La périodicité de synchronisation peut être variable mais elle est souvent effectuée une fois par période car dans la plupart des cas la localisation est effectuée de façon connue à partir de satellites diffusant une information de temps.

Dans les procédés connus de diffusion des messages de position chaque mobile occupe sans précautions particulière une tranche repérée libre au cours d'une phase préalable d'écoute du réseau.

Cette façon de faire a les inconvénients signalés plus haut.

Selon l'invention il est proposé de découper au moins pendant une période, de façon aléatoire, une tranche i repérée libre à l'issue de la phase préalable d'écoute. Un tel découpage est représenté figure 2 selon deux modes. Dans un premier mode représenté figure 2a, la durée et la position des sous-tranches d'émission à l'intérieur de la tranche sont quelconques et déterminées de façon aléatoire.

La génération de grandeurs variables de façon aléatoire et soumises à certaines contraintes est connue dans l'art et ne sera pas commentée ici. Sur la figure 2a, les sous-tranches d'émission ont été représentées par des rectangles hachurés tandis que les sous-tranches de réception sont représentées par de simples traits.

Dans un second mode représenté figure 2b, chaque tranche est de façon conventionnelle divisée en p sous-tranches égales et de rang 1-2...p.

Seuls le nombre et le rang des sous-tranches d'émission sont générés de façon aléatoire. Avec des tranches d'une durée de 25 ms, on peut envisager un nombre de sous-tranches de l'ordre de 10, de façon à obtenir des sous-tranches de 2,5 à 3 ms environ.

De telles durées d'émission sont détectables par des récepteurs tels que ceux utilisés habituellement dans les communications VHF ou UHF.

Le mode particulier de réalisation du procédé qui sera décrit ci-après est de ce type. Il est articulé en deux phases. Dans une première phase dite phase d'accès, le mobile n'émet dans la tranche i choisie que pendant une sous-tranche dont le rang est déterminé de façon aléatoire.

Si une émission est détectée dans une sous-tranche précédant celle dans laquelle on allait émettre on s'abstient d'émettre et on choisit une autre tranche libre, si possible avant la fin de la période de façon à ne pas perdre de temps.

Il n'est théoriquement pas nécessaire d'écouter dans les sous-tranches postérieures à sa propre émission, puisque celle-ci a du renvoyer tout autre utilisateur à une autre tranche.

Il reste cependant un risque $1/p$ de ne pas détecter une collision de message entre deux utilisateurs ayant choisi la même sous-tranche pour émettre en recherche d'accès. On peut réduire ce risque à $1/p^2$ si n'ayant détecté aucune présence, on recommence lors de la période suivante avant d'adopter la tranche ainsi sélectionnée (le risque sera ramené à $1/p^3$ si l'on fait trois fois l'opération, et ainsi de suite, mais le temps d'accès au canal est allongé en conséquence. Un temps d'accès long n'est pas forcément une gêne, car il part d'une situation non critique, telle que mise en marche ou trafic faible).

Lors de la recherche d'une tranche libre, l'occupation d'une seule sous-tranche doit être considérée comme une occupation.

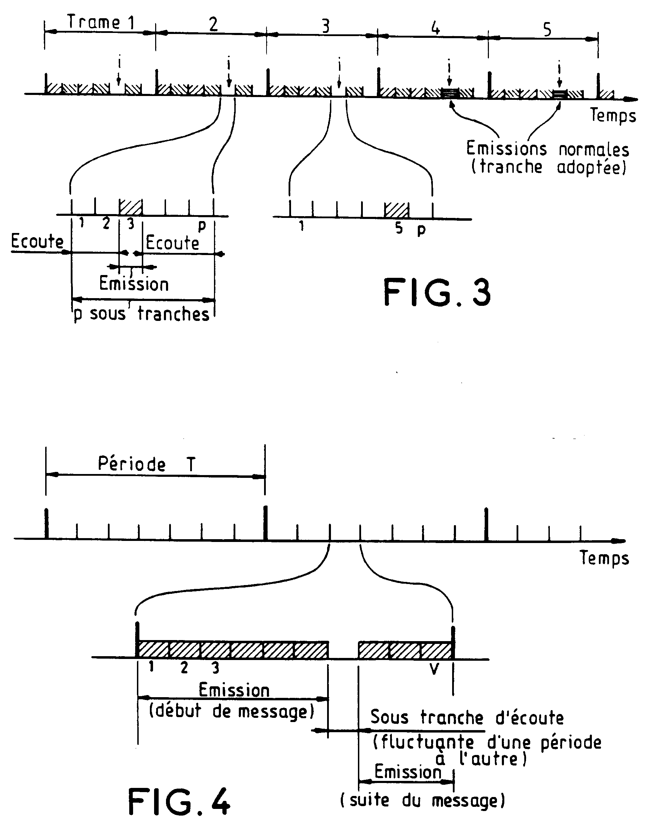

La figure 3, donne un exemple d'accès :

- la tranche i est détectée libre lors de la trame 1 ;
- lors de la trame 2, le tirage aléatoire a sélectionné la sous-tranche 3 pour l'émission, émission qui a lieu car rien n'est reçu sur les sous-tranches 1 et 2 ;
- lors de la trame 3, la sous-tranche 5 est sélectionnée pour l'émission, qui a lieu car rien n'est reçu dans les sous-tranches 1 à 4 ;
- lors de la trame 4 et au-delà, la tranche i est adoptée.

Dans une variante de réalisation de cette première phase, destinée à favoriser l'accès rapide, en particulier aux mobiles en recherche d'une tranche supplémentaire pour une émission plus fréquente, la loi de sélection aléatoire de la première sous-tranche d'émission est paramétrée par la distance du mobile le plus proche. Dans ce cas la valeur moyenne du rang de la sous-tranche d'émission croît avec la distance du mobile le plus proche. De la sorte le mobile qui en a le plus besoin en raison de la proximité d'un autre mobile a une probabilité plus grande d'émettre avant les autres et donc d'occuper la tranche avant eux, ce qui diminue son temps d'accès.

La seconde phase d'application du procédé intervient lorsque le mobile occupe une tranche. Cette phase a pour but de s'assurer que malgré les précautions d'accès prises aucun autre mobile n'émet sur la même tranche.

Du fait du risque résiduel $1/p$, $1/p^2$, etc... lors de la procédure d'accès deux participants peuvent avoir choisi la même tranche. Cette situation peut se produire aussi pour des participants, initialement éloignés l'un de l'autre et hors de portée l'un de l'autre lors de l'accès au réseau et qui se rapprochent devenant ainsi à portée l'un de l'autre.

Pour permettre la détection de cet état de collision, périodiquement, et avec de préférence une période légèrement fluctuante, par exemple en moyenne une trame sur k, un utilisateur qui occupe de façon stable une tranche temporelle, abandonne pendant une trame son émission normale pour la remplacer, dans cette tranche, par une émission ménageant au moins une sous-tranche d'écoute. La sous tranche d'écoute ainsi ménagée dans cette tranche permet de détecter, soit l'émission normale d'un autre utilisateur perturbateur sur la même tranche, soit l'émission dans une simple sous-tranche, au cas où un utilisateur perturbateur serait passé lui aussi en écoute au cours de la même trame. Les utilisateurs en recherche d'accès n'émettent normalement pas à ce moment-là, puisqu'il doivent pour le faire trouver une tranche totalement libre dans une trame.

Lorsqu'une collision est détectée, la procédure de résolution est la suivante : un premier utilisateur passé en écoute, décèle sur sa tranche, soit l'émission normale d'un second utilisateur, soit l'émission limitée à une sous-tranche d'un second utilisateur en contrôle de non collision et dont l'émission est intervenue avant la sous-tranche choisie par le premier utilisateur. le second utilisateur n'a donc pas encore pris conscience de l'état de collision. Le premier utilisateur, seul informé, abandonne sa tranche et en cherche une autre par la procédure d'accès définie pour la première phase. Une écoute préalable pendant une période T n'est cependant pas nécessaire car tout utilisateur ayant déjà accédé au réseau détient en mémoire l'état complet de la situation. Il n'y a donc pas de trame inutilisée. La probabilité de collision non détectée est de $1/kp$.

La non détection est due à l'impossibilité de recevoir lorsque l'on émet. Une solution est de ménager des pauses dans les émissions, ce qui est fait dans la phase de maintien décrite ci-dessus. Une variante est de ménager ces pauses dans le message émis lui-même (figure 4). La tranche est alors découpée en v sous-tranches identiques. Lors de chaque émission, le message est interrompu pendant une sous-tranche tirée au hasard parmi v, cette sous-tranche servant à l'écoute en vue de détecter une collision éventuelle. En cas de collision, le premier partenaire informé (donc celui ayant la sous-tranche d'écoute la plus précoce) interrompt son émission et entreprend de changer de tranche selon la procédure d'accès définie pour la première phase. L'autre utilisateur n'aura pas eu conscience de la collision et conserve sa tranche. Le choix de la même sous-tranche par deux utilisateurs conduit à une non détection de la collision, mais ce contrôle s'effectue à chaque trame, et une telle situation ne peut donc être durable.

Pour des raisons de normalisation, il peut être avantageux que les nombres p de sous-tranches au cours de la phase d'accès et v de sous-tranches au cours de la phase d'occupation soient égaux.

Les différents modes de réalisation de l'invention qui viennent d'être décrits ne sont pas exclusifs l'un de l'autre. Comme déjà signalés certains caractères de l'un des modes peuvent être transposés dans un autre.

De même le mode aléatoire de fonctionnement décrit n'exclut pas la possibilité de fonctionnement avec pilotage du canal par une station centrale.

On peut pour cela envisager que dans le système sans centralisation, une (ou plusieurs si nécessaire) tranche par période soit systématiquement laissée libre. Si une station maîtresse est à proximité, elle aura la possibilité d'utiliser cette tranche pour gérer le séquencement de tous les autres messages.

Le procédé selon l'invention est également compatible avec la possibilité de forçage d'accès : si un utilisateur ayant un besoin d'accès ne trouve pas de tranche libre, il accapare une tranche occupée par un utilisateur lointain. Ce type de fonctionnement peut d'ailleurs être affiné en prenant en compte non seulement la distance, mais la vitesse, et en "volant" le créneau d'un utilisateur lointain qui s'éloigne. Un critère cumulé peut être le temps estimé pendant lequel se prolongera la collision de message. Il peut être également prévu, dans ce cas, de "sauter" de temps en temps une émission pour rester en écoute, afin de s'assurer que la situation relative des deux mobiles évolue comme prévu.

Le procédé selon l'invention a été essentiellement décrit dans son application à un système anticollision ou de contrôle de trafic, par exemple aérien. Tout ce qui a été dit à propos de cette application particulière est applicable mutatis mutandis à tout canal travaillant en temps partagé conventionnement en périodes reproductibles elles-mêmes divisées en tranches. Les mobiles sont alors des utilisateurs. La notion de proximité entre deux mobiles est alors à remplacer dans le cas général par la notion de degré d'urgence pour la transmission. Cette urgence est de façon connue quantifiable par degrés préétablis par exemple 1 correspondant à l'urgence maximum 2 à une moins grande urgence.

## Revendications

1. Procédé de recherche par un utilisateur d'une tranche de temps libre sur un canal de communication en temps partagé, où tous les utilisateurs sont synchronisés, le temps étant de façon conventionnelle divisé en périodes de temps T reproductibles, chaque période comportant un nombre N de tranches de temps repérées 1, 2, 3,...i...N, l'accès à une tranche de temps pour l'émission du message de l'utilisateur comportant un repèrage des tranches de temps libres au cours d'au moins une période T d'écoute, puis un choix aléatoire d'une tranche i parmi les tranches repérées libres, le procédé comprenant les caractéristiques suivantes:

   a) pour au moins une période après que l'utilisateur ait décidé d'occuper la tranche i on répartit le temps de cette tranche i de façon aléatoire en sous tranches R de réception et sous tranches E d'émission ;
   b) tant qu'aucune émission d'un autre utilisateur n'a été reçue pendant les sous-tranches R de réception, une émission est commencée ou continuée pendant les sous-tranches suivantes E d'émission de la tranche i en cours et on conserve la tranche i au cours de la période suivante ;
   c) si une émission est reçue d'un autre utilisateur au cours d'une sous tranche R de réception on n'émet pas ou plus au cours des périodes suivantes E d'émissions, prévues sur la tranche i en cours, et on choisit une nouvelle tranche libre j ;
   d) on refait sur la tranche j, les opérations a et b ci-dessus et si une émission est reçue d'un autre utilisateur, on refait l'opération c.

2. Procédé selon la revendication 1, dans lequel les sous-tranches de réception ou d'émission constituent conventionnellement un ensemble de p sous-tranches de durées égales, chaque sous-tranche ayant un rang repéré 1, 2, ...p, le caractère aléatoire de la répartition des sous-tranches en sous-tranches d'émission et de réception étant assuré par choix aléatoire du rang des sous-tranches destinées à la réception ou à l'émission.

3. Procédé selon la revendication 2, dans lequel le nombre de sous-tranches d'émission est au plus égal à (p-1).

4. Procédé selon la revendication 1, dans lequel dans une première phase la répartition aléatoire des sous-tranches d'émission et de réception conduit à un temps total de réception supérieur au temps d'émission.

5. Procédé selon la revendication 3, dans lequel dans une première phase la répartition aléatoire des sous-tranches conduit à un nombre de sous-tranches de réception supérieure au nombre de sous-tranche d'émission.

6. Procédé selon la revendication 4, dans lequel dans une seconde phase la répartition aléatoire des sous-tranches conduit à un temps total d'émission supérieur au temps total de réception.

7. Procédé selon la revendication 5, dans lequel dans une seconde phase la répartition aléatoire des sous-tranches conduit à un nombre de sous-tranches d'émission supérieure au nombre de sous-tranches de réception.

8. Procédé selon l'une des revendications 4 ou 6, dans lequel l'utilisateur est un mobile et le message émis comporte au moins une indication de position géographique, le mobile participant avec d'autres se trouvant dans une même zone géographique à un système anti-collision, et dans lequel, au cours de la première phase, la répartition aléatoire des sous-tranches d'émission et de réception conduit à une première sous-tranche d'émission dont le début intervient un certain temps $\theta1$ après le début de la période, la valeur du temps $\theta1$ étant fournie par une génération aléatoire dont la valeur moyenne de sortie croît avec la distance entre le mobile et celui des autres mobiles qui en est le plus proche.

9. Procédé selon l'une des revendications 5 ou 7, dans lequel l'utilisateur est un mobile et le message émis comporte au moins une trouvant dans une même zone géographique à un système anti-collision, et dans lequel, au cours de la première phase, la répartition aléatoire des sous-tranches d'émission et de réception conduit à une première sous-tranche d'émission de rang $\gamma1$, la valeur du rang $\gamma1$ étant fournie par une génération aléatoire dont la valeur moyenne de sortie croît avec la distance entre le mobile et celui des autres mobiles qui en est le plus proche.

## Claims

1. Method by which a user can search for an unoccupied time slot in a time-division communications channel, where all the users are synchronised, the time being conventionally divided into reproducible time periods T, each period comprising a number N of time slots referenced 1, 2, 3,...i...N, the access to a time slot for the transmission of the message from the user involving identifying the unoccupied time slots during at least one listening period T, followed by a random choice of one slot i from among the slots identified as being unoccupied, said method comprising the following features:

    a) for at least one period after the user has decided to occupy the slot i, the time of this slot i is divided randomly into reception sub-slots R and transmission sub-slots E;
    b) so long as no transmission from another user has been received during the reception sub-slots R, a transmission is begun or continued during the following transmission sub-slots E of the slot i in progress and the slot i is kept during the following period;
    c) if a transmission is received from another user during a reception sub-slot R, no transmission is made, or no more transmissions are made, during the following transmission periods E planned in the slot i in progress and a new unoccupied slot j is chosen;
    d) the above operations a) and b) are performed again on the slot j, and if a transmission is received from another user, operation c) is performed again.

2. Method according to claim 1, wherein the reception or transmission sub-slots conventionally constitute a set of p sub-slots of equal durations, each sub-slot having a rank referenced 1, 2,...p, the random character of the distribution of the sub-slots into transmission and reception sub-slots being ensured by the random choice of the rank of the sub-slots intended for reception or transmission.

3. Method according to claim 2, wherein the number of transmission sub-slots is at most equal to (p-1).

4. Method according to claim 1, wherein in a first phase the random distribution of the transmission and reception sub-slots leads to a total reception time that is greater than the transmission time.

5. Method according to claim 3, wherein in a first phase the random distribution of the sub-slots leads to a number of reception sub-slots that is greater than the number of transmission sub-slots.

6. Method according to claim 4, wherein in a second phase the random distribution of the sub-slots leads to a total transmission time that is greater than the total reception time.

7. Method according to claim 5, wherein in a second phase the random distribution of the sub-slots leads to a number of transmission sub-slots that is greater than the number of reception sub-slots.

8. Method according to either of claims 4 or 6, wherein the user is a moving body and the transmitted message includes at least one indication of geographical position, the moving body participating with other moving bodies located in one and the same geographical zone in an anti-collision system, and wherein, during the first phase, the random distribution of the transmission and reception sub-slots leads to a first transmission sub-slot whose start occurs at a certain time $\theta 1$ after the start of the period, the value of the time $\theta 1$ being given by a random generation whose average output value increases with the distance between the moving body and that one of the other moving bodies which is closest to it.

9. Method according to either of claims 5 or 7, wherein the user is a moving body and the transmitted message includes at least one indication of geographical position, the moving body participating with other moving bodies located in one and the same geographical zone in an anti-collision system, and wherein, during the first phase, the random distribution of the transmission and reception sub-slots leads to a first $\gamma 1$ ranking transmission sub-slot, the value of the rank $\gamma 1$ being given by a random generation whose average output value increases with the distance between the moving body and that one of the other moving bodies which is closest to it.

**Patentansprüche**

1. Verfahren zum Suchen eines freien Zeitschlitzes in einem im Zeitschlitzbetrieb betriebenen Kommunikationskanal durch einen Benutzer, wobei sämtliche Benutzer synchronisiert sind, wobei die Zeit in herkömmlicher Weise in reproduzierbare Zeitperioden T unterteilt ist, wobei jede Periode eine ganze Zahl N von Zeitschlitzen enthält, die mit 1, 2, 3, ..., i, ..., N bezeichnet sind, wobei der Zugriff auf einen Zeitschlitz zum Senden einer Nachricht vom Benutzer eine Angabe der freien Zeitschlitze während wenigstens einer Hörperiode T und dann eine zufällige Wahl eines Schlitzes i unter den angegebenen freien Schlitzen umfaßt, wobei das Verfahren die folgenden Merkmale umfaßt:

    a) nachdem der Benutzer entschieden hat, den Schlitz i zu belegen, wird für wenigstens eine Periode die Zeit dieses Schlitzes i zufällig auf Empfangs-Unterschlitze R und Sende-Unterschlitze E verteilt;
    b) sofern während der Empfangs-Unterschlitze R keinerlei Sendung eines anderen Benutzers empfangen worden ist, wird während der folgenden Sende-Unterschlitze E des momentanen Schlitzes i ein Senden begonnen oder fortgesetzt, außerdem wird der Schlitz i während der folgenden Periode beibehalten;

c) wenn während eines Empfangs-Unterschlitzes R von einem anderen Benutzer eine Sendung empfangen wird, wird während der folgenden Sendeperioden E, die im momentanen Schlitz i vorgesehen sind, nicht oder nicht mehr gesendet, außerdem wird ein neuer freier Schlitz j gewählt;

d) im Schlitz j werden die obigen Operationen a und b wiederholt, außerdem wird, wenn von einem anderen Benutzer eine Sendung empfangen wird, die Operation c wiederholt.

2. Verfahren nach Anspruch 1, in dem die Empfangs- oder Sende-Unterschlitze in herkömmlicher Weise eine Gesamtheit aus p Unterschlitzen gleicher Dauer bilden, wovon jeder einen mit 1, 2,..., p bezeichneten Rang besitzt, wobei der zufällige Charakter der Verteilung der Unterschlitze in Sende- und Empfangs-Unterschlitze durch zufällige Wahl des Rangs der für den Empfang oder das Senden bestimmten Unterschlitze gewährleistet ist.

3. Verfahren nach Anspruch 2, in dem die Anzahl von Sende-Unterschlitzen höchstens gleich (p - 1) ist.

4. Verfahren nach Anspruch 1, in dem in einer ersten Phase die zufällige Verteilung der Sende- und Empfangs-Unterschlitze zu einer Gesamt-Empfangszeit führt, die größer als die Sendezeit ist.

5. Verfahren nach Anspruch 3, in dem in einer ersten Phase die zufällige Verteilung der Unterschlitze zu einer Anzahl von Empfangs-Unterschlitzen führt, die größer als die Anzahl von Sende-Unterschlitzen ist.

6. Verfahren nach Anspruch 4, in dem in einer zweiten Phase die zufällige Verteilung der Unterschlitze zu einer Gesamt-Sendezeit führt, die größer als die Gesamt-Empfangszeit ist.

7. Verfahren nach Anspruch 5, in dem in einer zweiten Phase die zufällige Verteilung der Unterschlitze zu einer Anzahl von Sende-Unterschlitzen führt, die größer als die Anzahl von Empfangs-Unterschlitzen ist.

8. Verfahren nach einem der Ansprüche 4 oder 6, in dem der Benutzer beweglich ist und die gesendete Nachricht wenigstens eine Angabe der geographischen Position enthält, wobei der bewegliche Benutzer zusammen mit anderen, die sich in derselben geographischen Zone befinden, an einem Antikollisionssystem teilnimmt, und in dem während der ersten Phase die zufällige Verteilung der Sende- und der Empfangs-Unterschlitze zu einem ersten Sende-Unterschlitz führt, dessen Beginn eine bestimmte Zeit $\theta 1$ nach dem Beginn der Periode eintritt, wobei der Wert der Zeit $\theta 1$ durch eine zufällige Erzeugung geliefert wird, deren mittlerer Ausgangswert mit der Strecke zwischen dem beweglichen Benutzer und demjenigen der anderen beweglichen Benutzer, der ihm am nächsten ist, anwächst.

9. Verfahren nach einem der Ansprüche 5 oder 7, in dem der Benutzer beweglich ist und die gesendete Nachricht wenigstens eine Angabe der geographischen Position enthält, wobei der bewegliche Benutzer zusammen mit anderen, die sich in derselben geographischen Zone befinden, an einem Antikollisionssystem teilnimmt, und in dem während der ersten Phase die zufällige Verteilung der Sende- und Empfangs-Unterschlitze zu einem ersten Sende-Unterschlitz mit Rang $\gamma 1$ führt, wobei der Wert des Rangs $\gamma 1$ durch eine zufällige Erzeugung geliefert wird, deren mittlerer Ausgangswert mit dem Abstand zwischen dem beweglichen Benutzer und demjenigen der anderen beweglichen Benutzer, der ihm am nächsten ist, anwächst.

période

tranche

1 2 N

t

FIG. 1

tranche

sous tranche réception

sous tranche émission

FIG. 2a

tranche

1 2 3 P

sous tranche émission

sous tranche réception

FIG. 2b

FIG. 3

FIG. 4